# EUROPÄISCHE PATENTANMELDUNG

(11) **EP 3 988 442 A1**
(43) Veröffentlichungstag der Anmeldung: **27.04.2022**
(21) Anmeldenummer: 20203863.4
(22) Anmeldetag: 26.10.2020
(51) Int. Cl.: B63B 79/10, G01G 19/00, G01V 7/10, G01V 7/06

(54) **ANORDNUNG SOWIE VERFAHREN ZUR MASSENBESTIMMUNG EINES SICH IM WASSER FORTBEWEGENDEN SCHIFFES**

(71) Anmelder: Fraunhofer-Gesellschaft zur Förderung der angewandten Forschung e.V., 80686 München (DE)
(72) Erfinder: Solass, Johannes, 79104 Freiburg (DE); Köpke, Corinna, 79104 Freiburg (DE)
(74) Vertreter: Rösler, Uwe

(57) **Zusammenfassung**

Beschrieben wird eine Anordnung zur Massenbestimmung eines sich im Wasser (1) fortbewegenden Schiffes (3) mit wenigstens einer Gravitationsfeldstärke-Sensoreinheit (4,5), kurz GFS-Sensoreinheit, die relativ zum sich fortbewegenden Schiff stationär gelagert ist, sowie mit einer Auswerteeinheit (6), die auf Grundlage von mit Hilfe der wenigstens einen GFS-Sensoreinheit (4,5) gewonnenen Messsignalen die Massenbestimmung des Schiffes (3) vornimmt.

## Beschreibung

### Technisches Gebiet

Die Erfindung bezieht sich auf eine Anordnung sowie ein Verfahren zur Massenbestimmung eines sich im Wasser fortbewegenden Schiffes.

Die Kenntnis über die tatsächliche Masse eines Schiffes im Allgemeinen sowie eines modernen Fracht- und Container-Schiffes im Besonderen dient in erster Linie der Sicherheit sowie der Vermeidung von gefährlichen Vorfällen bis hin zu Schiffshavarien, deren Ursachen zumeist auf Überladung oder falscher Beladung und einer damit einhergehenden unvorteilhaften Schiffsmassenverteilung zurückzuführen sind. Falsch deklarierte Waren oder zusätzlich mitgeführtes Schmuggelgut können zudem durch eine Bestimmung des tatsächlichen Schiffsgewichtes durch Zollbehörden leichter aufgedeckt werden. Hätten Zoll und andere Instanzen, wie beispielsweise Versicherungen, Reedereien sowie auch Schiffsbehörden, eine zuverlässige, d.h. unabhängig ermittelbare Angabe zum tatsächlichen Schiffsgewicht, so könnte ein Vergleich mit dem deklarierten Sollgewicht Unstimmigkeiten aufzeigen und so die Einleitung weiterer Maßnahmen, beispielsweise in Form physischer Kontrollen bzw. Inaugenscheinnahme der Schiffsladung, begründen.

### Stand der Technik

Da Schiffe im Allgemeinen zu groß sind um direkt gewogen werden zu können, erfolgt die Schiffsmassenbestimmung meist mit Hilfe von Näherungsverfahren, die darauf beruhen, das Volumen des verdrängten Wassers anhand des Tiefgangs des Schiffes zu ermitteln. Es existieren schiffsspezifische, hydrostatische Tafeln, in denen das von einem Schiff verdrängte Volumen in Abhängigkeit von dessen Tiefgangs tabelliert ist. Durch Multiplikation des auf diese Weise ermittelten verdrängten Wasservolumens mit der Dichte des Wassers kann auf das Gewicht des Schiffes geschlossen werden.

In der Druckschrift US 6,836,746 B2 ist ein Sensorsystem offenbart, das die Zuladung eines Schiffes durch Veränderung der Position mehrerer über der Wasserlinie angebrachter Sensoren durch Differenzbildung von deren Sensorsignalen im Vergleich zum Leerzustand des Schiffes, ermittelt. Das auf diese Weise ermittelte Schiffsgewicht steht jedoch lediglich der Schiffsbesatzung zur Verfügung und ist für Kontrollbehörden größtenteils unbekannt. Lediglich als einzige frei verfügbare Angabe für eine unabhängige Schiffsmassenbestimmung steht der Tiefgang eines jeweiligen Schiffes über das automatische Identifikationssystem, kurz AIS, zur Verfügung. Da diese Angaben jedoch sehr fehlerbehaftet sind, sind auch die Rückschlüsse auf das tatsächliche Schiffsgewicht fehlerbehaftet.

### Darstellung der Erfindung

Der Erfindung liegt die Aufgabe zugrunde, eine Anordnung sowie ein Verfahren zur Massenbestimmung eines sich im Wasser fortbewegenden Schiffes mit einer ausreichend hohen Genauigkeit anzugeben, mit der es Behörden ermöglich wird, Gewichtskontrollen von Schiffen während der Fahrt durchs Wasser vornehmen zu können, um auf der Grundlage der ermittelten Schiffsgewichte bedarfsweise weitere Schritte einzuleiten. Die hierfür erforderlichen Maßnahmen sollen den Schiffsverkehr in keiner Weise beeinträchtigen und unabhängig von schiffseigenen Kontroll- und Messsystemen realisierbar sein.

Die Lösung der der Erfindung zugrundeliegenden Aufgabe ist im Anspruch 1 angegeben. Gegenstand des Anspruches 11 ist ein lösungsgemäßes Verfahren zur Bestimmung der Masse eines sich im Wasser fortbewegenden Schiffes. Ferner sind in den Ansprüchen 5 ff. lösungsgemäße Anwendungen der Anordnung zur Schiffsgewichtbestimmung angegeben.

Den Erfindungsgedanken in vorteilhafter Weise weiterbildende Merkmale sind Gegenstand der Unteransprüche sowie der weiteren Beschreibung, insbesondere unter Bezugnahme auf die Ausführungsbeispiele zu entnehmen.

Die lösungsgemäße Anordnung zur Massenbestimmung eines sich im Wasser fortbewegenden Schiffes nutzt den immanenten Masseneinfluss der Schiffsmasse auf das Gravitationsfeld der Erde, der sensorisch quantitativ erfasst wird. Hierzu sieht die Anordnung wenigstens eine Gravitationsfeldstärke-Sensoreinheit, kurz GFS-Sensoreinheit vor, die relativ zum sich fortbewegenden Schiff stationär gelagert ist. Zudem umfasst die Anordnung eine Auswerteeinheit, die auf der Grundlage von mit Hilfe der wenigstens einen GFS-Sensoreinheit gewonnenen Messsignalen die Massenbestimmung des Schiffes vornimmt.

In bevorzugter Weise eignen sich für die wenigstens eine GFS-Sensoreinheit wenigstens ein Gravimeter, ein Beschleunigungssensor bzw. Akzelerometer oder wenigstens zwei zeitsynchronisierte Atomuhren.

Von den vorstehenden GFS-Sensoreinheiten eignet sich in bevorzugter Weise ein Relativgravimeter zur sensorischen Erfassung der zeitlichen Veränderung der lokalen Gravitationsfeldstärke, die im vorstehenden Anwendungsfall durch die Präsenz der Masse eines Schiffes hervorgerufen wird. Da die derzeit größten Container-Schiffe eine Maximalmasse von bis zu 200 000 Tonnen besitzen, bedarf es möglichst präziser und hochauflösender Gravimeter, um eine Massenbestimmung mit einer Genauigkeit von 100 Tonnen, vorzugsweise von 10 Tonnen, und darunter realisieren zu können. Die derzeit verfügbaren feinst auflösenden Gravimeter stellen supraleitende Gravimeter dar, die durch eine kapazitive Vermessung der Schwebehöhe einer Niobkugel über einen supraleitenden Ring, in dem ein elektrischer Strom widerstandslos fließt, die Gravitationsfeldstärke am Ort des Gravimeters mit einer Messauslösung von 0,1 nm/s² erfassen können.

Zur messtechnisch erfassbaren Einflussnahme der Masse eines Schiffes auf das Gravitationsfeld am Ort der wenigstens einen GFS-Sensoreinheit, gilt es, die GFS-Sensoreinheit im Bereich einer Bewegungstrajektorie eines zu vermessenden Schiffes stationär derart anzuordnen, so dass das Schiff die wenigstens eine GFS-Sensoreinheit passiert, vorzugsweise lotrecht passiert. Die Anbringung wenigstens einer GFS-Sensoreinheit eignet sich in besonderer Weise im Bereich einer Schifffahrtsrinne oder Schifffahrtsroute, vorzugsweise am oder im Grund der Schifffahrtsrinne oder -route, so dass Schiffe bei Durchfahrt durch die Rinne die wenigstens eine GFS-Sensoreinheit möglichst raumnah und vorzugsweise lotrecht überfahren.

Alternativ zur Anbringung der wenigstens einen GFS-Sensoreinheit am oder im Grund der Schifffahrtsrinne oder -route bietet es sich an, die wenigstens eine GFS-Sensoreinheit an einer Tragstruktur, beispielsweise einer Brücke oder einer Spannseilanordnung, die die Fahrrinne überragt, stationär derart anzubringen, so dass die Schiffe bei Durchfahrt durch die Fahrrinne die wenigstens eine GFS-Sensoreinheit lotrecht passieren.

In einer bevorzugten Ausführungsform ist die wenigstens eine, vorzugsweise am Grund einer Schifffahrtsrinne angebrachte GFS-Sensoreinheit über eine Kabelverbindung mit einer separat angeordneten elektrischen Energieversorgungseinheit sowie der Auswerteeinheit verbunden, in der die mit Hilfe der wenigstens einen GFS-Sensoreinheit gewonnenen Messsignale zur Ermittlung der Schiffsmasse zugrunde gelegt werden. Neben den mit Hilfe der wenigstens einen GFS-Sensoreinheit gewonnenen Messsignalen ist die Kenntnis über die räumliche Position des Schiffes während der Schiffspassage relativ zur wenigstens einen GFS-Sensoreinheit zur Schiffsmassenbestimmung vorteilhaft, wenn nicht gar erforderlich, um eine wünschenswerte Genauigkeit in der Schiffsmassenbestimmung zu erreichen. So sind zum einen der räumliche Abstand zwischen Schiff und GFS-Sensoreinheit sowie auch, bei einer nicht exakt lotrechten Schiffspassage relativ zur GFS-Sensoreinheit, der seitliche Versatz relativ zum Gravitationsvektor zwischen Schiff und GFS-Sensoreinheit von Bedeutung. Die exakten Schiffspositionsdaten stehen über das automatische Identifikationssystem (AIS) oder über das universale automatische Identifikationssystem (UAIS) oder über das System zur Identifizierung und Verfolgung über große Entfernungen (LRIT, "Long-Range-Identification and Tracking) zur Verfügung und sind frei zugänglich abrufbar.

Die Genauigkeit mit der die Schiffsmasse auf der Grundlage der sensorisch erfassten Gravitationsfeldstärkenänderung sowie der räumlichen Relativlage zwischen dem zu vermessenden Schiff und der wenigstens einen GFS-Sensoreinheit, ermittelt werden kann, hängt neben der Qualität des gewählten mathematisch numerischen Berechnungsmodells innerhalb der Auswerteeinheit sowie dem Auflösungsvermögen der GFS-Sensoreinheit vor allem von der Messkonstellation, d.h. dem räumlichen Abstand sowie der Lage des zu vermessenden Schiffes und der wenigstens einen GFS-Sensoreinheit ab. Eine Überschlagsrechnung ergibt, dass eine Schiffsmasse von bereits 10 Tonnen in einem Abstand von 100 Metern eine Änderung der Gravitationsfeldstärke von 0,0667 nm/s² hervorzurufen vermag. Durch die Verwendung supraleitender Gravimeter, die eine Messempfindlichkeit von 0,1 nm/s² besitzen, wäre eine Detektierbarkeit eines Schiffes mit einer Schiffsmasse von 10 Tonnen in einem Abstand von 100 Metern durchaus möglich. Vorzugsweise wird die GFS-Sensoreinheit mit einer Messfrequenz typischerweise von wenigstens 1 Hz betrieben, so dass die Einflussnahme der Schiffsmasse während der Annäherung, der unmittelbaren Schiffspassage sowie auch der Schiffsentfernung von der GFS-Sensoreinheit erfassbar ist.

Idealerweise ist die GFS-Sensoreinheit direkt am Grund der Fahrrinne installiert, so dass eine ideale lotrechte Überfahrt der Schiffe gewährleistet werden kann. Die Messgenauigkeit kann überdies verbessert werden, je geringer der Abstand zwischen Schiff und GFS-Sensoreinheit ist. Die Wassertiefe, welche den Abstand zwischen der Fahrrinnensole bzw. dem Fahrrinnengrund und der Wasseroberfläche entspricht, beträgt beispielsweise für die Elbe zwischen Hamburg und Cuxhaven im Mittel ca. 16 Meter und für die angrenzende Nordsee bis zu 70 Meter. Bei derartigen Wassertiefen und den damit verbundenen verhältnismäßig geringen Abständen zwischen Schiff und GFS-Sensoreinheit sollte es möglich sein, Schiffsmassen mit einer Auflösung von unter 10 Tonnen, d.h. bis hinab zu 1 Tonne, messtechnisch exakt zu erfassen.

In einer weiteren bevorzugten Ausführungsform ist die GFS-Sensoreinheit gemeinsam mit einer elektrischen Energieversorgungseinheit, vorzugsweise in Form einer Batterie oder Akkus, als autonom arbeitende Baueinheit ausgebildet, in der zur Übermittlung der Messsignale an eine separat angeordnete Auswerteeinheit zudem eine drahtlose Kommunikationseinheit integriert ist.

Vorzugsweise bietet es sich an, eine Vielzahl einzelner GFS-Sensoreinheiten längs einer Fahrrinne bzw. Schifffahrtsroute mit einem vorgegebenen Abstand zueinander anzubringen, deren Messsignale allesamt einer Schiffsmassenbestimmung zugrunde gelegt werden. Die Anordnung der Vielzahl von GFS-Sensoreinheiten kann je nach Größe der zu vermessenden Schiffe in einem linearen Muster oder arrayförmigen Rastermuster am Grund einer Fahrrinne gewählt werden.

Zum Zwecke der Massenbestimmung eines Schiffes wird an einem geografisch definierten, d.h. stationären Messort, an dem die wenigstens eine GFS-Sensoreinheit angebracht ist, die Gravitationsfeldstärke ohne Masseneinfluss durch ein Schiff oder ähnliches zum Erhalt wenigstens eines ersten Messwertes gemessen. Erfolgt eine Schiffspassage wird am Messort die Gravitationsfeldstärke unter Masseneinfluss des Schiffes vermessen zum Erhalt wenigstens eines zweiten Messwertes, wobei zur Massenbestimmung des Schiffes der Differenzwert zwischen ersten und zweiten Messwert zugrunde gelegt wird. Vorzugsweise wird die wenigstens eine GFS-Sensoreinheit zumindest unmittelbar vor, während und nach einer Schiffspassage in einem Messmodus betrieben, bei dem die GFS-Sensoreinheit Messwerte mit einer Messfrequenz von wenigstens 1 Hz liefert. Zur Ermittlung des zweiten Messwertes wird vorzugsweise jener Messwert während der Schiffspassage relativ zur GFS-Sensoreinheit ausgewählt, bei der das Schiff den kleinsten Abstand zur GFS-Sensoreinheit besitzt. Hierzu wird die geografische Schiffsposition relativ zum Messort, d.h. zur der wenigstens einen GFS-Sensoreinheit ermittelt und der Massenbestimmung des Schiffes zugrunde gelegt.

Die vorstehend erläuterte zeitdiskrete Erfassung von Messwerten mit einer Abtastfrequenz von wenigstens 1 Hz ermöglicht es überdies, die während der Schiffspassage gewonnenen Messwerte der Bestimmung einer Massenverteilung des Schiffes zugrunde zu legen. Da die geometrischen Daten des jeweiligen Schiffes, d.h. Länge und Breite bekannt sind, z.B. entnehmbar aus den AIS-Informationen, können die in den Messsignalen während der Schiffspassage auftretenden Signalamplitudenvariationen ausgewertet und auf unterschiedliche Massenverteilungen innerhalb des Schiffes bewertet werden.

Im Falle der Anordnung von wenigstens zwei längs einer Schifffahrtsroute bzw. - rinne angebrachter GFS-Sensoreinheiten gilt es, deren Abstand vorzugsweise kleiner zu wählen als die Schiffslängen der die Schiffsroute typischerweise passierenden und zu vermessenden Schiffe. Auf diese Weise lassen sich mit Hilfe von wenigstens zwei separaten GFS-Sensoreinheiten, die gleichzeitig von einem Schiff passiert werden, ortsaufgelöste Schiffsmasseverteilungen innerhalb des Schiffes ermitteln. Überdies ist es möglich, durch Messredundanzen die Messgenauigkeit zur Massenbestimmung unter Verwendung mehrerer GFS-Sensoreinheiten zu verbessern.

Mit Hilfe der lösungsgemäßen Anordnung und Methodik lässt sich eine Messanordnung etablieren, welche es ermöglicht, die Schiffsmasse unabhängig, d.h. vollständig autonom zu bestimmen. Daher kann die Masse eines Schiffes bei Ankunft im Hafen und bei der Ausfahrt gemessen und mit den Angaben der Schiffseigner abgeglichen werden. In Kombination mit den der Hafenbehörde vorliegenden Daten zu Be- und Entladevorgängen kann somit der Waren- und Güterverkehr effizient nachvollzogen werden und etwaige Anomalien können den Zoll- und Sicherheitsbehörden gemeldet werden. Kommt es zu größeren unerklärlichen Abweichungen, so kann dies als Hinweis auf unsachgemäß deklarierte Güter oder Schmuggelgut gewertet werden. Wird das System, wie vorgeschlagen, in allen größeren bspw. europäischen Häfen eingesetzt, so kann auf diese Weise der innereuropäische Warenverkehr effizient nachvollzogen werden.

Schifffahrtstraßen in der Nordsee sind hochfrequentiert und überdies ein schwieriges Gebiet für Seefahrer, da sich Sandbänke und Fahrrinnen verlagern können. Die Manövrierfähigkeit von Schiffen hängt unter anderem von deren Gesamtmasse ab, welche eine entscheidende Rolle insbesondere bei Ausweichmanövern spielt. Aus diesem Grunde würde eine genauere Bestimmung und Kenntnis der Gesamtmasse eines Schiffes beispielsweise Lotsen unterstützen, um Schiffe sicher durch schwierige Gewässer zu leiten.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Darstellung der Messanordnung am Grund einer Schifffahrtsrinne,
- Fig. 2: Messdiagramm zur Erfassung der Gravitationsfeldstärkeänderung,
- Fig. 3a, b: alternative Anordnungsvarianten zur Anbringung der GFS-Sensoreinheiten sowie
- Fig. 4: Messanordnung mit zwei Atomuhren.

### Wege zur Ausführung der Erfindung, gewerbliche Verwendbarkeit

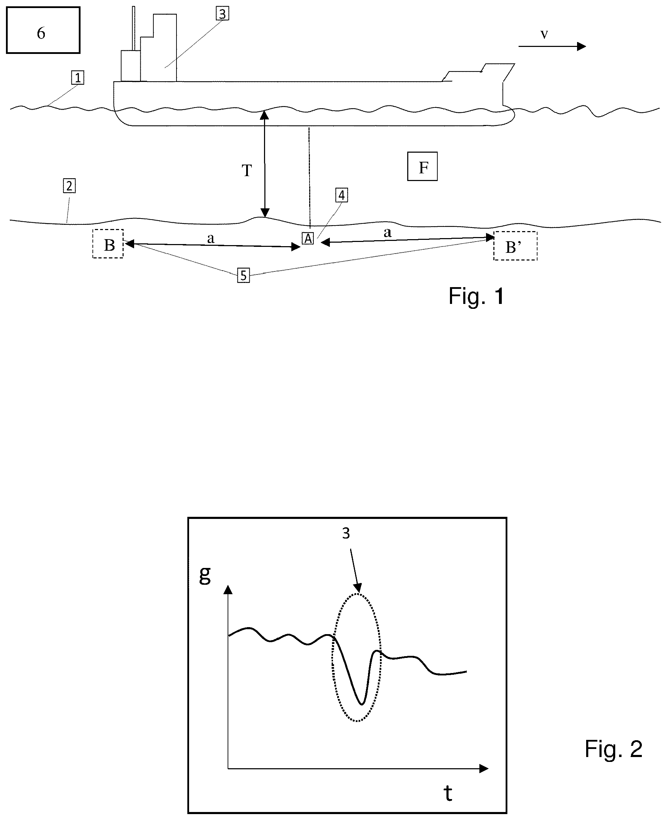

Figur 1 illustriert eine Seitenansicht auf eine Fahrrinne F längs der sich ein Schiff 3 auf der Wasseroberfläche 1 mit einer vorzugsweise konstanten Eigengeschwindigkeit v fortbewegt. Die Fahrrinne F verfügt über eine Wassertiefe T, die dem Abstand zwischen der Wasseroberfläche und dem Fahrrinnengrund 2 entspricht. Am oder im Fahrrinnengrund 2 ist eine Gravitationsfeldstärke-(GFS)-Sensoreinheit 4 am Ort A angebracht, die im dargestellten Zustand gemäß Figur 1 vom Schiff 3 lotrecht überfahren wird.

Die vorzugsweise als supraleitendes Gravimeter ausgebildete GFS-Sensoreinheit 4 misst die lokal vorherrschende Gravitationsfeldstärke g mit einer Messfrequenz von wenigstens 1 Hz.

In Figur 2 ist ein Messdiagramm mit einer Abszisse als Zeitachse t sowie einer Ordinate, längs der die von Seiten der GFS-Sensoreinheit erhaltenen Messsignale aufgetragen sind, die jeweils die zeitaufgelöste Gravitationsfeldstärke g darstellen. Das in der Messkurve dargestellte lokale Minimum rührt von der Überfahrt des Schiffes 3 über der GFS-Sensoreinheit her, d.h. im Moment der maximalen Annäherung zwischen dem Massenschwerpunkt des Schiffes 3 und der am Grund der Schifffahrtsrinne 2 angebrachten GFS-Sensoreinheit nimmt die Gravitationsfeldstärke g lokal aufgrund der Eigengravitation des Schiffes ab. Die quantitative Abnahme der am Ort der GFS-Sensoreinheit lokal vorherrschenden Gravitationsfeldstärke ist im Wesentlichen proportional zur Masse des Schiffes. Auf der Grundlage dieser Messwertänderung kann somit auf die Gesamtmasse des Schiffes rückgeschlossen werden. Die Berechnung der Schiffsmasse erfolgt in einer Auswerteinheit 6, an die Kabel-gebunden oder kabellos die Messsignale der GFS-Sensoreinheit 4 zur Auswertung und Schiffsmassenbestimmung übertragen werden. Neben den Messsignalen erhält die Auswerteinheit 6 bspw. über AIS die genauen Positionsdaten des Schiffes, um die Relativlage zwischen der GFS-Sensoreinheit und dem Schiff erfassen zu können. Die Auswerteinheit ist vorzugsweise landgestützt und für eine Überwachungsbehörde zugänglich angeordnet.

Ferner sind in Figur 1 optional zwei weitere GFS-Sensoreinheiten 5 an den Orten B, B' angeordnet, die gemeinsam mit der GFS-Sensoreinheit 4 eine linear verteilte Messanordnung ergeben. Die insgesamt drei GFS-Sensoreinheiten 4, 5 können zum einen durch redundante Messungen die Messsicherheit verbessern, zum anderen ermöglichen die GFS-Sensoreinheiten die Bestimmung einer Massenverteilung innerhalb des Schiffes 3. Hierzu sind die Abstände a zwischen den GFS-Sensoreinheiten 4, 5 kleiner als die Schiffslänge gewählt.

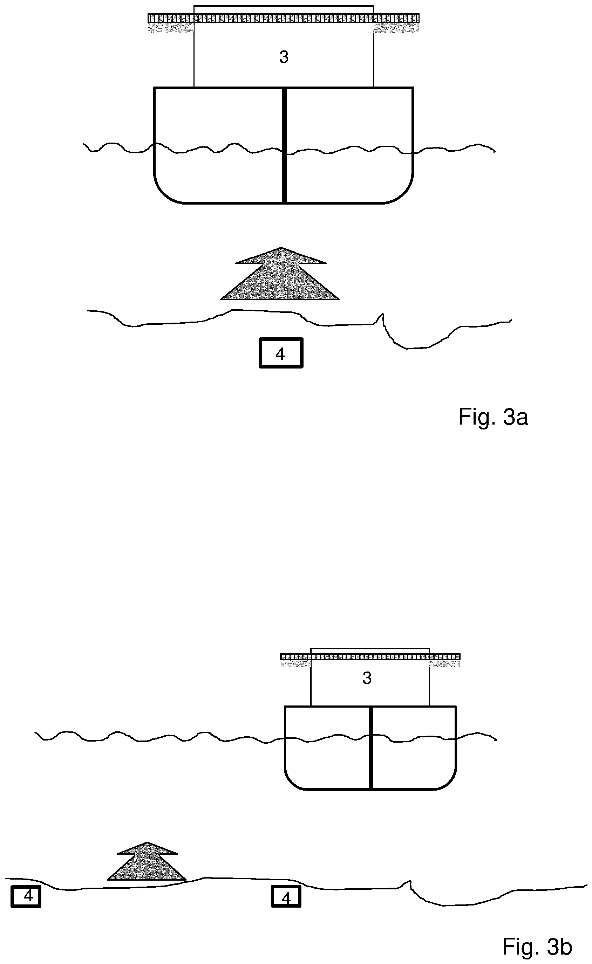

Im Idealfall überfährt das Schiff 3 die wenigstens eine GFS-Sensoreinheit 4 lotrecht über dem Ort der GFS-Sensoreinheit 4, 5 gemäß Figur 3a. In diesem Fall vermag die Masse des Schiffes 3 entgegen der Erdanziehungskraft am Ort der GFS-Sensoreinheit 4 zu wirken, so dass in diesem Fall ein maximaler Einfluss der Schiffsmasse am Ort der GFS-Sensoreinheit 4 gemessen werden kann.

Diese Konstellation ist erreichbar, sofern die GFS-Sensoreinheit 4 längs einer Schifffahrtsrinne angeordnet ist, die genügend schmal ist, vorzugsweise kleiner 300 Meter misst. Neben der Schiffsmassenbestimmung dient in diesem Fall die GFS-Sensoreinheit 4 zudem auch als Positionsdetektor um die Schiffsposition bei der Überfahrt hinreichend exakt erfassen zu können.

In Figur 3b ist der Fall illustriert, bei dem mehrere GFS-Sensoreinheiten 4 am Boden einer Schifffahrtsrinne oder Schifffahrtsroute angeordnet sind. In diesem Fall überfährt das Schiff 3 die GFS-Sensoreinheiten 4 nicht lotrecht, sondern seitlich versetzt. Aufgrund der wenigstens zwei GFS-Sensoreinheiten 4 und den damit ermittelbaren Messsignalen lassen sich das Schiffsgewicht sowie auch die Schiffsposition hinreichend genau ermitteln. Darüber hinaus lässt sich in Kombination beider GFS-Sensoreinheiten 4, die jeweils mit einer Messfrequenz von wenigstens 1 Hz betrieben werden, auch Informationen über die Massen- bzw. Gewichtsverteilung innerhalb des Schiffes ermitteln.

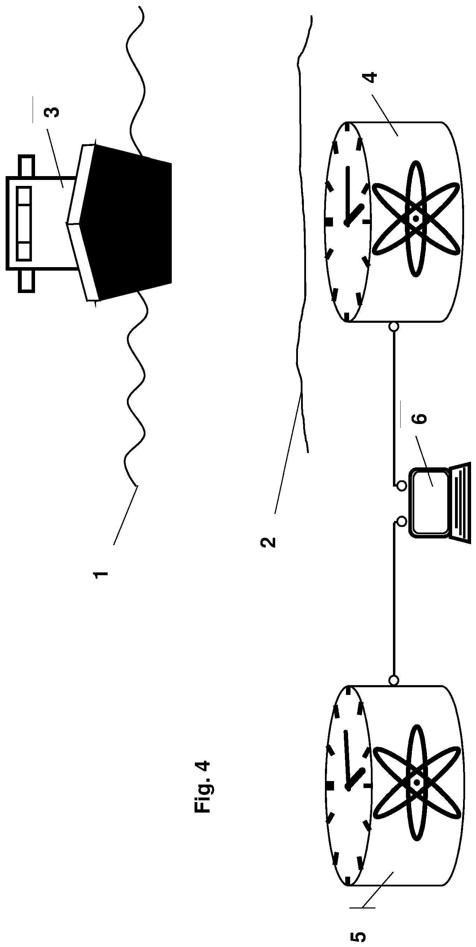

Figur 4 illustriert eine Messanordnung unter Verwendung von zwei zeitsynchronen Atomuhren als GFS-Sensoreinheiten, von denen eine erste Atomuhr 4 am Meeresboden 2 angeordnet ist und eine zweite Atomuhr 5 an einem anderen Ort, an dem die Gegenwart der Schiffsmasse keinen messbaren Einfluss auf das lokale Gravitationsfeld besitzt. Durch die räumliche Nähe der Schiffsmasse eines die am Meeresboden 2 angeordnete Atomuhr 4 vorzugsweise lotrecht passierenden Schiffes 3 wird die lokal am Ort der Atomuhr 4 herrschende Gravitationsfeldstärke durch die Eigengravitation des Schiffes 3 reduziert, wodurch die Systemzeit der Atomuhr 4 aufgrund der Einstein'schen gravitationsbedingten Raumzeitkrümmung langsamer verläuft als am Ort der zweiten Atomuhr 5, die bspw. am Ort der Auswerteeinheit 6 vorgesehen ist, der kilometerweit weg an Land ist. Die zweite Atomuhr läuft demzufolge auf Grund einer höheren Gravitationsfeldstärke nach. Der Nachlauf ist proportional zur Gravitationsfeldänderung und damit proportional der verursachenden Schiffsmasse. Diese kann mit Hilfe der Auswerteeinheit 6 ermittelt werden.

Mit Hilfe der lösungsgemäßen Anordnung lassen sich die Sicherheit von Hafenbetreibern sowie auch die Überwachungsmöglichkeiten von Zoll und Wasserschutzpolizei erheblich verbessern. Auf der Grundlage der lösungsgemäßen Anordnung lässt sich ein Analyseverfahren zur verbesserten Nachverfolgung des Warenverkehrs innerhalb eines Hafens oder im hafennahen und angrenzenden Seebereich etablieren.

### Bezugszeichenliste

- 1: Meeresoberfläche
- 2: Schifffahrtsrinnenboden bzw. Meeresgrund
- 3: Schiff
- 4, 5: Gravitationsfeldstärke-Sensoreinheit
- 6: Auswerteinheit
- v: Schiffseigengeschwindigkeit
- F: Fahrrinne
- T: Wassertiefe

## Patentansprüche

1. Anordnung zur Massenbestimmung eines sich im Wasser fortbewegenden Schiffes mit wenigstens einer Gravitationsfeldstärke-Sensoreinheit, kurz GFS-Sensoreinheit, die relativ zum sich fortbewegenden Schiff stationär gelagert ist, sowie mit einer Auswerteeinheit, die auf Grundlage von mit Hilfe der wenigstens einen GFS-Sensoreinheit gewonnenen Messsignalen die Massenbestimmung des Schiffes vornimmt.

2. Anordnung nach Anspruch 1,
**dadurch gekennzeichnet, dass** die wenigstens eine GFS-Sensoreinheit wenigstens ein Gravimeter, einen Beschleunigungssensor (Akzelerometer) und/oder wenigstens zwei synchronisierte Atomuhren umfasst.

3. Anordnung nach Anspruch 2,
**dadurch gekennzeichnet, dass** das wenigstens eine Gravimeter ein supraleitendes Gravimeter ist.

4. Anordnung nach einem der Ansprüche 1 bis 3,
**dadurch gekennzeichnet, dass** die Messsignale der wenigstens einen GFS-Sensoreinheit kabelgebunden oder kabellos an die Auswerteinheit übertragbar sind.

5. Anordnung nach einem der Ansprüche 1 bis 4,
**dadurch gekennzeichnet, dass** die wenigstens eine GFS-Sensoreinheit im Bereich einer Bewegungstrajektorie des Schiffes stationär derart angeordnet ist, dass das Schiff die wenigstens eine GFS-Sensoreinheit passiert.

6. Anordnung nach einem der Ansprüche 1 bis 5,
**dadurch gekennzeichnet, dass** die wenigstens eine GFS-Sensoreinheit im Bereich einer Schifffahrtsrinne oder -route angeordnet ist.

7. Anordnung nach Anspruch 6,
**dadurch gekennzeichnet, dass** die wenigstens eine GFS-Sensoreinheit am oder im Grund im Bereich der Schifffahrtsrinne oder -route derart angeordnet ist, so dass das Schiff bei Durchfahrt durch die Fahrrinne die wenigstens eine GFS-Sensoreinheit überfährt.

8. Anordnung nach Anspruch 5,
**dadurch gekennzeichnet, dass** die wenigstens eine GFS-Sensoreinheit über der Schifffahrtsrinne oder -route an einer Tragstruktur stationär derart angeordnet ist, so dass das Schiff bei Durchfahrt durch die Fahrrinne die wenigstens eine GFS-Sensoreinheit passiert.

9. Anordnung nach einem der Ansprüche 1 bis 8,
**dadurch gekennzeichnet, dass** die Auswerteeinheit eine Recheneinheit umfasst, die auf der Grundlage wenigstens der Messsignale sowie von geographischen Positionsdaten des Schiffes unter Einsatz eines numerischen Auswertealgorithmus die Masse des Objektes bestimmt.

10. Anordnung nach Anspruch 9,
**dadurch gekennzeichnet, dass** zumindest die geographischen Positionsdaten des Schiffes mittels eines Systems zur Identifizierung und Verfolgung über große Entfernungen (LRIT-Long Range Identification and Tracking) oder eines Automatischen Identifikationssystems (AIS) oder (UAIS- Universal Automatic Identification System) ermittelbar sind.

11. Verfahren zur Bestimmung der Masse eines sich in Wasser fortbewegenden Schiffes, dessen lokaler Masseneinfluss auf das Gravitationsfeld der Erde gemessen und der Massenbestimmung des Schiffes zugrunde gelegt wird.

12. Verfahren nach Anspruch 11,
**dadurch gekennzeichnet, dass** an einem geographisch definierten, stationären Messort eine Gravitationsfeldstärke ohne Masseneinfluss durch das Schiff gemessen wird, zum Erhalt wenigstens eines ersten Messwertes,
dass am Messort eine Gravitationsfeldstärke unter Masseneinfluss durch das Schiff gemessen wird, zum Erhalt wenigstens eines zweiten Messwertes, und
dass die Massenbestimmung des Schiffes wenigstens auf der Grundlage der Differenz beider Messwerte durchgeführt wird.

13. Verfahren nach Anspruch 12,
**dadurch gekennzeichnet, dass** die Messung wenigstens des zweiten Messwertes während einer Vorbeifahrt des Schiffes relativ zum Messort vorgenommen wird, bei der das Schiff einen kleinsten Abstand zum Messort besitzt.

14. Verfahren nach Anspruch 13,
**dadurch gekennzeichnet, dass** die geographische Schiffsposition relativ zum Messort ermittelt und der Massenbestimmung des Schiffes zugrunde gelegt wird.

15. Verwendung der Anordnung nach einem der Ansprüche 1 bis 10 zur Bestimmung der Massenverteilung innerhalb des Schiffes durch Vorsehen wenigstens einer GFS-Sensoreinheit, die bei einer Passage des Schiffes an der GFS-Sensoreinheit zeitdiskrete Messungen mit einer vorgegebene Abtastrate vornimmt, und
dass die bei der Schiffspassage durchgeführten zeitdiskreten Messungen gewonnenen Messsignale der Bestimmung der Massenverteilung des Schiffes zugrunde gelegt werden.

16. Verwendung nach Anspruch 15,
**dadurch gekennzeichnet, dass** wenigstens zwei GFS-Sensoreinheiten in einem bekannten Abstand längs einer Schifffahrtsrinne oder -route am Grund angeordnet sind, deren Abstand zueinander kleiner als eine dem Schiff zuordenbaren Schiffslänge ist.

17. Verwendung nach Anspruch 15 oder 16,
**dadurch gekennzeichnet, dass** die Abtastrate wenigstens 1 Hz beträgt.
